# EUROPEAN PATENT SPECIFICATION

(11) **EP 0 688 443 B1**
(45) Date of publication and mention of the grant of the patent: **25.09.2002**
(21) Application number: 95909249.5
(22) Date of filing: 06.01.1995
(51) Int. Cl.: G02F 1/1337

(54) **Multi-domain color filter substrate**
Multidomänen-Farbfiltersubstrat
Substrat de filtres colorés à domaines multiples

(30) Priority: 10.01.1994 US 178715
(43) Date of publication of application: 27.12.1995
(73) Proprietor: HONEYWELL INC., Minneapolis Minnesota 55408 (US)
(72) Inventor: MC CARTNEY, Richard, I., Scottsdale, AZ 85254 (US)
(74) Representative: Fox-Male, Nicholas Vincent Humbert
(86) International application number: PCT/US95/00590
(87) International publication number: WO 95/018989

(56) References cited:
- EP-A- 0 189 214
- EP-A- 0 525 477
- EP-A- 0 525 478
- NATURE, vol.351, 1, LONDON GB pages 49 - 50 W.M. GIBSON ET AL.: 'Surface-mediated alignment of nematic liquid crystals with polarized laser light'

## Description

### BACKGROUND OF THE INVENTION

### 1. Field of the Invention

The present invention relates to an optical fiber LED assembly for coupling the light from a light emitting element such as a laser diode (LD) to an optical fiber via a rod lens with distributed refractive index.

### 2. Description of the Related Art

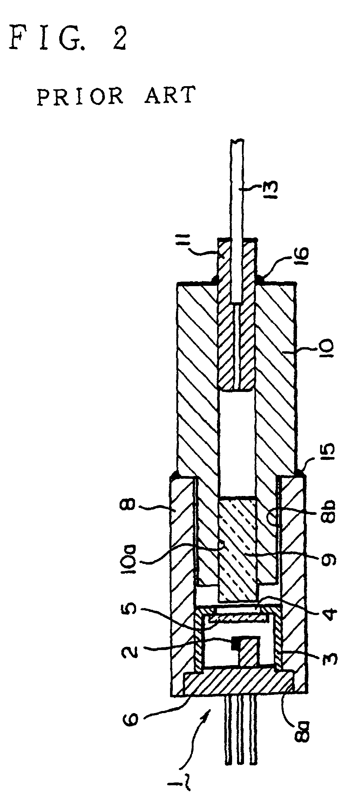

A problem with an optical fiber LED assembly having the aforesaid structure will be described with reference to Fig. 2 which is a cross-sectional view,showing an optical fiber LED assembly which couples the light from a light emitting element to an optical fiber via a rod lens with distributed refractive index.

A light emitter chip 2 is supported in a hermetically sealed space formed by a base 6, a can 3, and a glass pane 5 of a light source element 1. The can 3 of the light source element 1 is inserted in a hole 8b of a first holder 8 and the base 6 is in close contact with and fixed to the hole 8b of the first holder 8.

A rod lens with distributed refractive index 9 is fixed to one end of a second holder 10 and a ferrule 11, which supports an optical fiber 13, is fixed to the other end of the second holder 10.

Both surfaces of the glass pane 5 of the light source element 1 are provided with reflectionless coating for acquiring a reflectance of about 0.2% to about 1% in general. The end surface of the rod lens with distributed refractive index 9 is also provided with similar reflectionless coating.

The light emitting point of the light emitter chip 2, which is the light emitting element, of the light source element 1 does not always coincide with the center of the can 3 surrounding the chip 2. For this reason, if the outer periphery of the can 3 is established as the reference, then the deviation of the optical axis would take place. To avoid such deviation of the optical axis, it is necessary to accomplish axial alignment of the order of µm between the structure supporting the light source element 1 and the structure supporting the rod lens with distributed refractive index 9. This need makes it difficult to maintain the airtightness of the structure of the aforesaid apparatus.

Housing the above-mentioned optical fiber LED assembly itself in a vacuum vessel and exhausting air from it adds to the manufacturing cost and it also adds to the size of the entire apparatus, presenting a problem in use.

US-A-5 048 919 describes a prior art optical fiber LED assembly that includes a flexible, adherent, transparent, hydrophobic gel, which completely encapsulates and seals a gap between two cylindrical members prevents a laser and fiber elements from being exposed to a plating solution. This silicone gel exhibits a refractive index of about 1.4 which, being generally in the range of that of the fiber, mitigates the effect of reflections from the fiber input end.

### SUMMARY OF THE INVENTION

It is an object of the present invention to provide an optical fiber LED assembly wherein only a part of the aforesaid type of the optical fiber LED assembly is hermetically sealed and which is capable of preventing the time-dependent deterioration in the optical coupling efficiency for the light which is emitted from the light source device and which enters the optical fiber.

To this end, according to the present invention, there is provided an optical fiber LED assembly which is equipped with a can-shaped light emitting element for radiating light through a transparent aperture-covering plate located in the top of the can; a first cylindrical holder which supports the can-shaped light emitting element on one end thereof; a rod lens with distributed refractive index; an optical fiber ferrule; a second cylindrical holder which supports the rod lens with distributed refractive index on one end thereof, which accepts and supports the distal end of the optical fiber ferrule on the other end, and which is inserted and fixed in the first cylindrical holder, the rod lens with distributed refractive index being directed toward the transparent aperture-covering plate of the light emitting element, characterised by, a seal ring which is inserted between the light emitting element and the second holder in the first holder; and a gelled refractive index matching agent which is hermetically charged in the space formed by the seal ring, the transparent aperture-covering plate, and the second holder.

In the optical fiber LED assembly, the seal member may use heat-resistant resin such as silicone rubber.

In the optical fiber LED assembly, the silicone-based refractive index matching agent, which provides a refractive index ranging from 1.4 to 1.6, may be used for the aforesaid refractive index matching agent.

### BRIEF DESCRIPTION OF THE DRAWINGS

Fig. 1 is a longitudinal cross-sectional view showing an assembly illustrative of an embodiment of an optical fiber LED assembly according to the present invention; and
Fig. 2 is a schematic diagram showing the layout of the components of a conventional optical fiber LED assembly which couples the light from a light emitting element to an optical fiber via a rod lens with distributed refractive index.

### DESCRIPTION OF THE PREFERRED EMBODIMENT

The present invention will be described in further detail with reference primarily to the accompanying drawings.

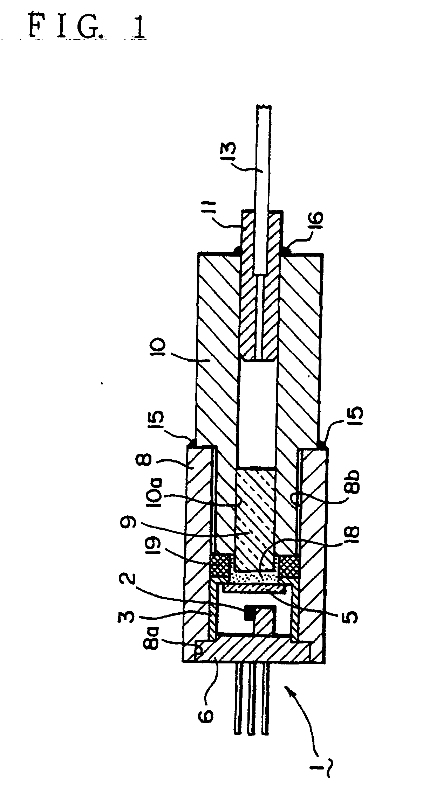

Fig. 1 is the longitudinal cross-sectional view of the LED assembly in accordance with the present invention. The light emitter chip 2 is mounted on the projection provided on the ceramic base 6 in the airtight can 3 for protecting the light emitter, the airtight can 3 being provided integrally with the base 6 of the light source element 1. The top surface of the airtight can 3 is provided with an aperture 4 which is closed by a transparent plate such as a thin glass pane 5.

One end of a metallic first holder 8 is provided with a receiving hole 8a for receiving the base 6 of the light source element 1, the can 3 of the light source element being received in the through hole 8a of the first holder.

One end of a metallic second holder 10, i.e. a portion 10a to be inserted in the first holder 8, has an outside diameter which is 0.1 to 0.2 mm smaller than the inside diameter of the through hole 8a of the first holder so as to produce a gap. This gap is provided for coordinating the optical axis of the laser light source 1 and that of the rod lens with distributed refractive index 9.

The rod lens with distributed refractive index 9 is inserted and supported in the through hole 10a on one end of the second holder 10 and a ferrule 11, which supports the distal end of an optical fiber 13, is inserted in the other end and adjusted in axial position before it is fixed with an adhesive. The positional adjustment allows the ferrule 11 to be located and fixed so that the image of the light emitting point of the light emitter chip 2 is formed at the distal end of the optical fiber 13.

An epoxy adhesive is applied beforehand to the outer peripheral surface of the ferrule 11. The axial position of the ferrule 11 in relation to the rod lens with distributed refractive index 9 is adjusted, then the adhesive is heated at a temperature of about 100°C to about 120°C so as to cure it. If stainless steel is used for the second holder 10 and zirconia ceramic is used for the ferrule 11, then the ferrule 11 can be fixed in a fully hermetically sealed state because the linear expansion coefficient of the second holder 10 is larger than that of the ferrule 11, so that the ferrule 11 is press-fitted at the above-mentioned temperature.

A seal ring 19 is inserted between the light source element 1 and the second holder 10 in the first holder 8. A refractive index matching agent 18 is hermetically charged in the space formed by the seal ring 19, the aperture 4 of the light source element (see Fig. 2), and the second holder 10. The refractive index matching agent 18 is a silicone-based gelled material which preferably has a refractive index of 1.2 to 1.4. The seal ring 19 is made of a cylindrical synthetic rubber. Silicone rubber exhibits good thermal stability and it is suitably used for the seal ring 19. The seal ring 19 and the refractive index matching agent 18 are to be inserted before the second holder 10 is coupled to the first holder 8 and their optical axes are aligned. Then, the first holder 8 and the second holder 10 are spot-welded. The relative positions of the first holder 8 and the second holder 10 are adjusted, their optical axes are aligned, then a plurality of spots 15 are subjected to spot welding for fixation.

In the optical fiber LED assembly according to the present invention, the refractive index matching agent 18 is charged around the outer surface of the glass pane 5 and around the end surface of the rod lens with distributed refractive index 9 to prevent them from being exposed to air. This completely shields the glass pane and the end surface of the rod lens with distributed refractive index against open air, thus successfully solving the deterioration problem with the conventional optical system.

## Claims

1. A color filter substrate for a liquid crystal display comprising a substrate coated with a polymer layer photo-polymerized with linearly polarized light, and pixels, each pixel being formed by three subpixels (12,13,22; 14,23,24; ...) arranged in two rows (10, 20), each subpixel comprising an individual color area; wherein the polymer layer of a first subset of the plurality of subpixels is treated so that adjacent liquid crystal molecules are aligned in a first direction and the polymer layer of a second subset of the plurality of subpixels is treated so that adjacent liquid crystal molecules are aligned in a second direction; wherein each of the first row (10) and second row (20) of the plurality of subpixels contains members from the first and second subsets arranged so that no members from the same subset are adjacent; wherein the subpixels (22, ..., 26) of the second row (20) are offset from the subpixels (12, ..., 17) of the first row (10) so that the three subpixels of each pixel are arranged in a triangular configuration so as to produce a minimum area for color mixing; and wherein the first and second directions are different.

2. A color filter substrate according to claim 1, wherein the first and second directions are 90 degrees apart.

## Patentansprüche

1. Farbfiltersubstrat für eine Flüssigkristallanzeige mit einem Substrat, das mit einer mit linear polarisiertem Licht fotopolymerisierten Polymerschicht beschichtet ist, und Bildelementen, wobei jedes Bildelement durch drei in zwei Reihen (10, 20) angeordnete Teilbildelemente (12, 13, 22; 14, 23, 24; ...) gebildet wird, wobei jedes Teilbildelement eine einzelne Farbfläche umfaßt; wobei die Polymerschicht einer ersten Teilmenge der Mehrzahl von Teilbildelementen so behandelt wird, daß benachbarte Flüssigkristallmoleküle in einer ersten Richtung ausgerichtet werden, und die Polymerschicht einer zweiten Teilmenge der Mehrzahl von Teilbildelementen so behandelt wird, daß benachbarte Flüssigkristallmoleküle in einer zweiten Richtung ausgerichtet werden; wobei die erste Reihe (10) und die zweite Reihe (20) der Mehrzahl von Teilbildelementen jeweils Elemente der ersten und der zweiten Teilmenge enthalten, die so angeordnet sind, daß keine Elemente aus derselben Teilmenge benachbart sind; wobei die Teilbildelemente (22, ..., 26) der zweiten Reihe (20) von den Teilbildelementen (12, ..., 17) der ersten Reihe (10) versetzt sind, so daß die drei Teilbildelemente jedes Bildelements in einer Dreieckkonfiguration angeordnet sind, um so eine minimale Fläche für die Farbenmischung zu erzeugen; und wobei die erste und die zweite Richtung verschieden sind.

2. Farbfiltersubstrat nach Anspruch 1, wobei die erste und die zweite Richtung um 90 Grad auseinanderliegen.

## Revendications

1. Substrat de filtre couleur pour affichage à cristaux liquides comprenant un substrat enrobé d'une couche polymère photo-polymérisée avec une lumière polarisée linéairement, et des pixels, chaque pixel étant formé par trois sous-pixels (12, 13, 22 ; 14, 23, 24 ;...) disposés en deux rangées (10, 20), chaque sous-pixel composant une zone de couleur individuelle ; dans lequel la couche polymère d'un premier sous-ensemble de la pluralité de sous-pixels est traitée de telle sorte que des molécules de cristaux liquides adjacentes soient alignées dans un premier sens et la couche polymère d'un deuxième sous-ensemble de la pluralité de sous-pixels est traitée de telle sorte que les molécules de cristaux liquides adjacentes soient alignées dans un deuxième sens ; dans lequel chacune de la première rangée (10) et de la deuxième rangée (20) de la pluralité de sous-pixels contient des éléments des premier et deuxième sous-ensembles disposés de telle sorte qu'aucuns éléments du même sous-ensemble ne soient adjacents ; dans lequel les sous-pixels (22, ..., 26) de la deuxième rangée (20) sont décalés des sous-pixels (12, ..., 17) de la première rangée (10) de telle sorte que les trois sous-pixels de chaque pixel soient disposés en une configuration triangulaire de manière à produire une zone minimum de mélange de couleurs ; et dans lequel les premier et deuxième sens sont différents.

2. Substrat de filtre couleur selon la revendication 1, dans lequel les premier et deuxième sens sont écartés de 90 degrés.
